# FASCICULE DE BREVET EUROPEEN

(11) **EP 1 137 034 B1**
(45) Date de publication et mention de la délivrance du brevet: **02.06.2010**
(21) Numéro de dépôt: 01410016.8
(22) Date de dépôt: 12.02.2001
(51) Int. Cl.: H01H 71/08, H02B 1/20, H01R 9/26

(54) **Dispositif d'assemblage et de raccordement électrique d'appareils électriques modulaires**
Vorrichtung für Zusammensetzung und elektrische Verbindung von modularen elektrischen Geräten
Device for assembling and electricaly connecting of modular electrical devices

(30) Priorité: 20.03.2000 FR 0003512
(43) Date de publication de la demande: 26.09.2001
(73) Titulaire: Schneider Electric Industries SAS, 92500 Rueil-Malmaison (FR)
(72) Inventeur: Caire, Jean,, 38050 Grenoble Cedex 09 (FR); Pellicano, Joseph,, 38050 Grenoble Cedex 09 (FR)
(74) Mandataire: Ritzenthaler, Jacques

(56) Documents cités:
- EP-A- 0 066 293
- EP-A- 0 071 156
- EP-A- 0 467 171
- AT-B- 366 854
- DE-A- 3 405 996
- DE-A- 3 802 359
- FR-A- 2 453 521

## Description

La présente invention concerne un dispositif d'assemblage et d'alimentation d'une pluralité d'appareils électriques tels des appareils de puissance et des blocs auxiliaires fixés sur un rail de montage et ayant des boîtiers modulaires accolés côte à côte, comprenant au moins une barre conductrice, la ou lesdites barres véhiculant respectivement le neutre et/ou une ou plusieurs phases, les dites barres étant logées dans un support isolant et s'étendant les unes parallèlement aux autres dans ledit support, chacune des barres comportant des dents réparties à intervalles réguliers le long de ladite barre et s'étendant perpendiculairement à la direction longitudinale de ladite barre, lesdites dents étant destinées à être introduites dans les bornes correspondantes des appareils, ledit support logeant les barres pouvant être recoupé en longueur suivant au moins un plan de découpe.

Lorsqu'un opérateur souhaite recouper un peigne du genre précédemment mentionné à la longueur souhaitée, il est actuellement obligé de démonter le peigne et de découper séparément d'une part le support isolant, et d'autre part, les barres afin de garantir les distances d'isolement. En effet, si le peigne n'est pas démonté préalablement à la découpe, les copeaux de limaille conductrice se déposant sur la matière plastique isolante séparant les barres forment des bavures susceptibles de créer des zones d'amorçage.
L'un des autres inconvénients des peignes connus tient en ce qu'il est nécessaire de briser la partie isolante du peigne lorsque l'on veut raccorder un câble de section importante aux bornes de phase situées sous le peigne.
On connaît un peigne décrit dans la demande de brevet EP-A-0 071 156 comportant les caractéristiques du préambule de la revendication 1.

La présente invention propose un dispositif de raccordement et d'assemblage électrique pouvant être recoupé à la longueur souhaitée sans démontage préalable et sans risque d'amorçage. Ce dispositif, entre autres avantages, facilite le raccordement de câbles de grosse section notamment aux bornes de phase.

A cet effet, la présente invention a pour objet un dispositif selon la revendication 1.
Selon une réalisation particulière, le support isolant précité est réalisé par moulage.
Selon une autre caractéristique, le support comporte des moyens d'indexage de la barre à l'intérieur du conduit correspondant.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective d'un dispositif de raccordement selon l'invention vu de dessus,
- La figure 2 est une vue en perspective du même dispositif, vu de dessous,
- la figure 3 est une vue en coupe transversale du dispositif de la figure précédente,
- la figure 4 est une vue en perspective d'un ensemble d'appareils modulaires raccordés électriquement à un dispositif de raccordement selon l'invention, et vu de l'arrière,
- la figure 5 est une vue en coupe transversale suivant V-V de la figure 4,
- la figure 6 est une vue identique à la figure 4, mais illustrant la partie avant des appareils et du dispositif de raccordement selon l'invention,
- la figure 7 est une vue partielle en perspective illustrant plus particulièrement la face de raccordement des appareils, et
- la figure 8 est une vue similaire à la précédente, mais illustrant en outre le raccordement de deux câbles de grosse section à deux bornes respectivement de phase et de neutre des appareils.

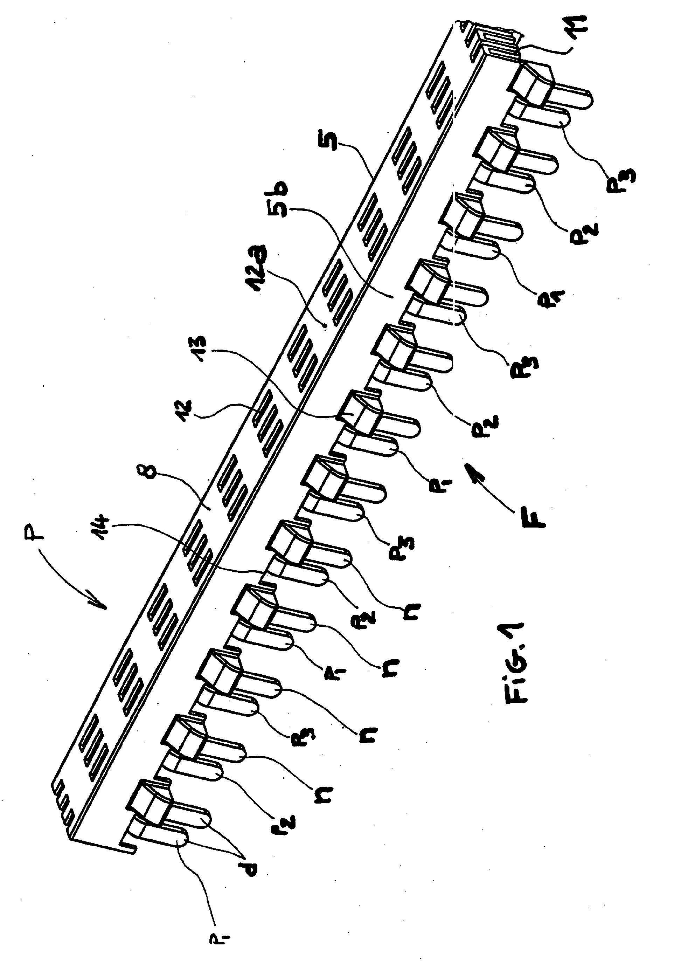

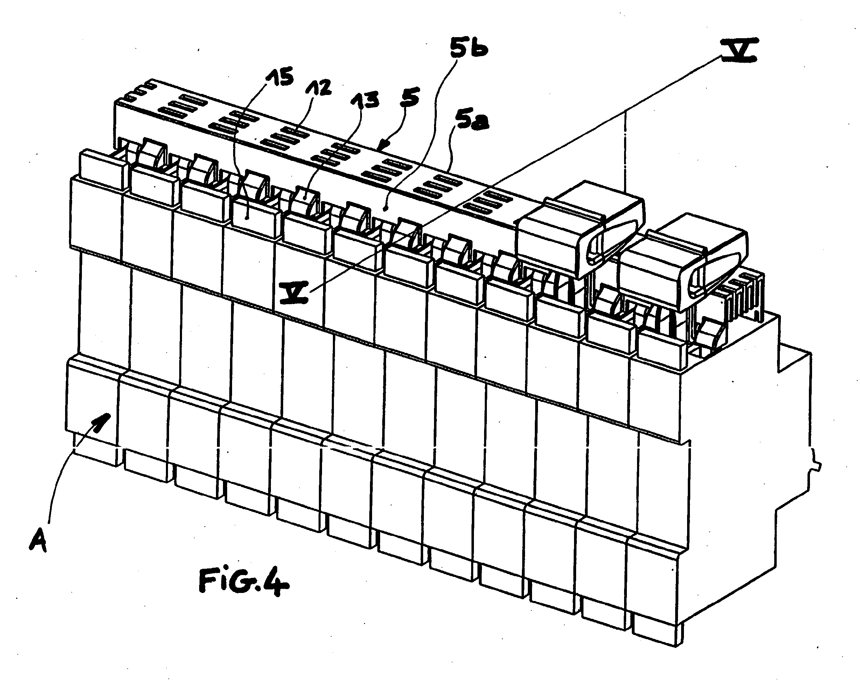

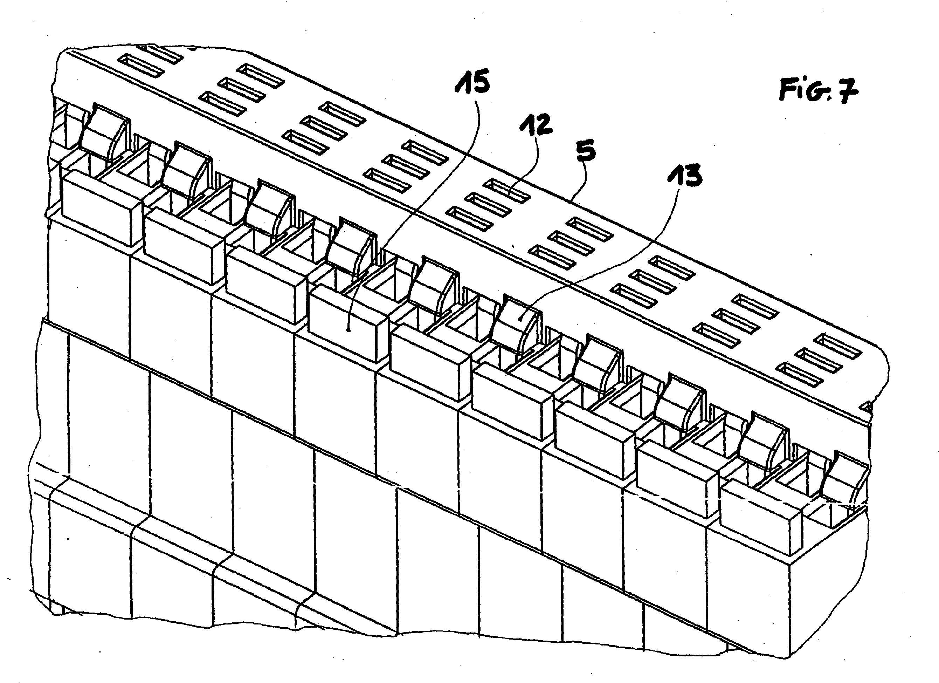

Sur les figures 1 à 3, on voit un dispositif d'assemblage et de raccordement électrique P selon l'invention, destiné à être utilisé pour assurer l'assemblage et l'alimentation électrique d'un ensemble d'appareils électriques modulaires A tels des disjoncteurs, lesdits appareils A étant destinés à être montés côte à côte sur un rail de montage (non représenté) tel qu'illustré sur les figures 4 à 8.

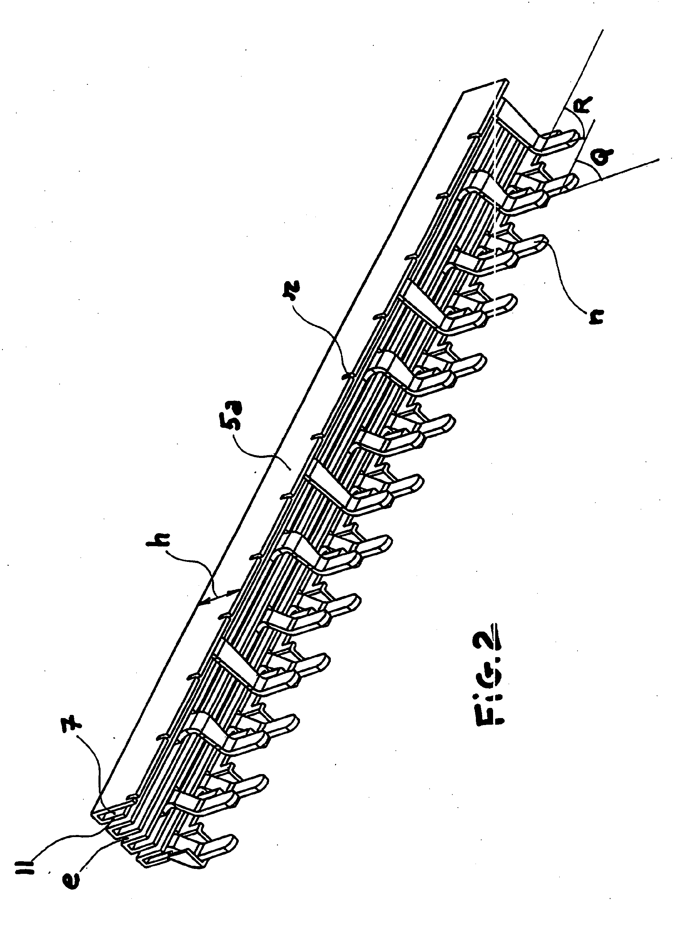

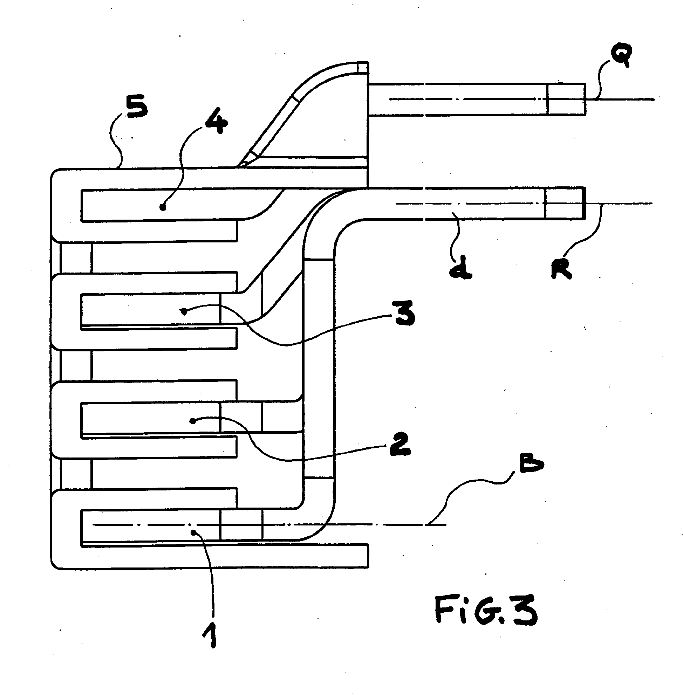

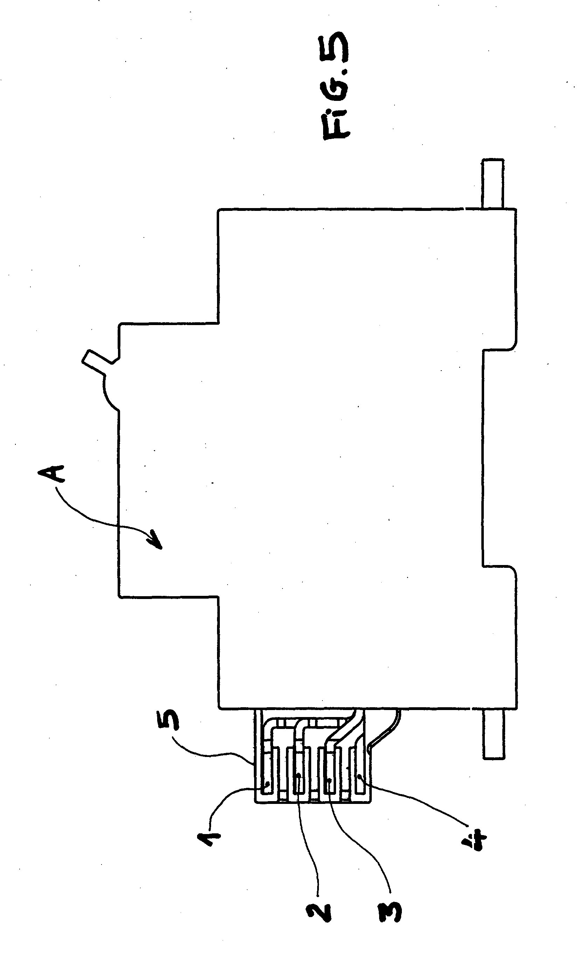

De manière connue en soi, un tel dispositif comprend un certain nombre de barres électriquement conductrices 1 à 4, quatre dans cette réalisation particulière, lesdites barres 1 à 4 étant logées dans un support isolant 5 et étant destinées à véhiculer respectivement les différentes phases et le neutre. Comme ceci est plus particulièrement visible sur les figures 3 et 5, ces barres s'étendent à l'intérieur du support 5 à plat parallèlement les unes aux autres et comportent chacune un certain nombre de languettes formant dents d réparties à intervalles réguliers sur toute la longueur desdites barres 1 à 4. Ce dispositif ainsi constitué forme un peigne de raccordement P lequel, lorsque vu de l'arrière (suivant la flèche F sur la figure 1), présente des dents d distribuant successivement les différentes phases p1,p2 ,p3, et ce de manière répétitive le long du peigne ou du rail, avec interposition d'une dent n distribuant le neutre entre deux dents de phase p1 ,p2 ,p3 successives. Les dents de neutre n sont toutes alignées dans un premier plan Q (fig.2), tandis que les dents de phase p1,p2,p3 sont alignées dans un second plan R parallèle au premier mais décalé vers l'avant du peigne P par rapport audit premier plan Q.

Suivant cette réalisation particulière de l'invention, le support isolant 5 comporte un certain nombre de conduits 7 (fig.2), s'étendant parallèlement les uns aux autres et débouchant du côté des appareils, chacun étant destiné à recevoir une barre conductrice 1 à 4. Ces conduits 7 présentent une section transversale sensiblement en forme de U et sont situés à une certaine distance les uns par rapport aux autres de manière à garantir les distances d'isolement. Chacune des barres 1 à 4 s'étend dans un plan B (fig.3) parallèle aux plans Q,R des dents et perpendiculaire à la face de raccordement 6 des appareils A lorsque le peigne est en position montée. Les conduits 7 sont reliés les uns aux autres par la paroi de fond 8 du peigne P, de manière à former un seul bloc. Les conduits 7 sont séparés par des parties évidées 12 au niveau de plans de découpe D et réunies par des portions de matière 12a dudit support 5 entre ces parties évidées 12. Ce support 5 est bordé par deux flasques latéraux 5a,5b s'étendant parallèlement aux parois latérales 11 des conduits 7, sur une hauteur h supérieure à celle des conduits 7. Ces conduits 7 sont séparés les uns par rapport aux autres par un espace libre e destiné, en complément aux parois 11 des conduits, à réaliser un isolement entre les barres 1 à 4. Chacune des barres 1 à 4 est fixée à l'intérieur du conduit 7 correspondant par l'intermédiaire d'encoches et bossages (non représentés) de forme complémentaires, prévus respectivement dans les barres et les parois 11 formant les conduits 7, ces éléments de forme complémentaire étant destinés à réaliser un indexage des barres à l'intérieur desdits conduits 7.

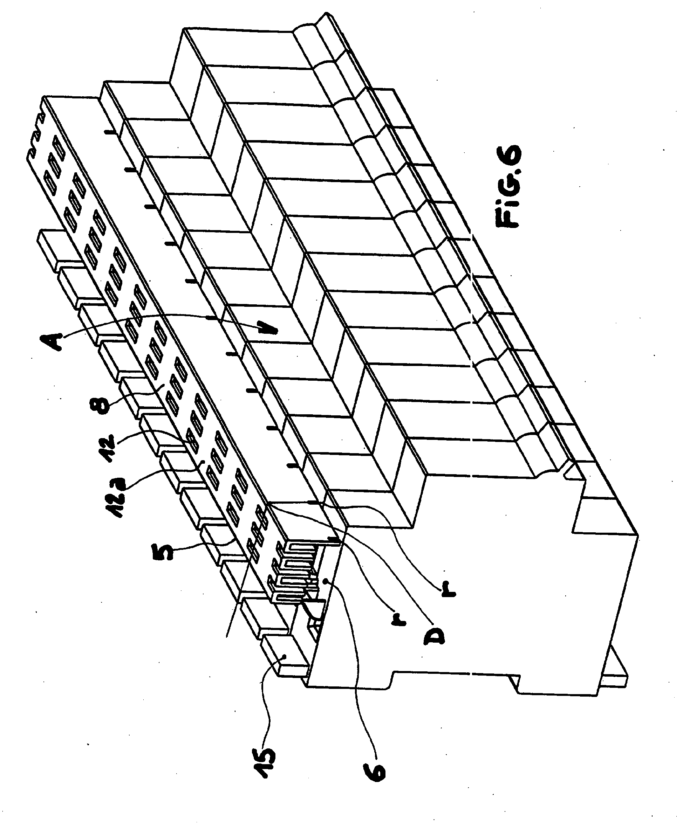

En se référant plus particulièrement à la figure 6, on voit que le support 5 présente en des endroits prédéterminés, des repères r s'étendant dans des plans perpendiculaires à la direction longitudinale du peigne P et formant des plans de découpe D suivant lesquels le peigne P pourra être recoupé si nécessaire. Ces repères pouvant être associés à des parties de moindre épaisseur, sont répartis à intervalles réguliers sur toute la longueur du peigne P en étant séparés deux à deux d'une distance prédéterminée de 18mm, correspondant à la distance entre deux dents de neutre n successives.

Sur la paroi dite de fond 8 du peigne P, orientée du côté opposée aux appareils A lorsque le peigne P est mis en place, sont ménagés les évidements 12 (ou parties évidées précités) situés au niveau des plans de découpe D précités, chaque évidemment 12 étant situé entre deux barres de phase successives. Ici, le terme « phase » doit être compris comme englobant le neutre et les phases protégées. Ces évidements 12 comprennent, au niveau de chaque repère r, trois évidements 12 alignés les uns par rapport aux autres dans chaque plan de découpe D. Ces évidements sont disposés sur toute la longueur du peigne P et constituent des zones d'air entre les phases.

Comme on le voit en particulier sur les figures 1 à 3, les dents d de chacune des barres 1 à 4 ne s'étendent pas dans le plan de leur barre de support respective, mais suivant un plan parallèle à celui-ci mais décalé par rapport à ce plan en direction de l'arrière des appareils. En outre, le support isolant 5 se trouve décalé vers l'avant des appareils par rapport à l'ensemble des dents. Ainsi, le support isolant 5 présentant une face avant 5a et une face arrière 5b, le plan Q des dents de neutre n est décalé par rapport au plan R des dents de phase en direction de l'arrière des appareils, la face arrière dudit support se trouvant sensiblement dans le plan des dents de phase.

On voit également notamment sur les figures 1 et 4 que les dents n véhiculant le neutre sont protégés par un capot isolant 13 venu de matière avec le support isolant 5. Les dents de neutre n sont ainsi protégées tout en laissant les bornes de phase libres d'accès. Cette facilité d'accès aux bornes de phase est encore accrue grâce à la présence d'encoches 14 ménagées dans le support isolant 5 entre deux capots de neutre 13 successifs. On notera que le support isolant 5 est fabriqué de préférence par moulage d'une matière plastique telle que le polyamide, et que les capots de protection 13 des dents de neutre n sont venus de moulage avec ledit support 5.

Le support isolant 5, une fois découpé à la longueur souhaitée, peut être fermé par deux flasques d'extrémité par clipsage. Ces flasques (non représentés) comprennent d'une part, des parties ajourées situées en regard des conduits 7 et d'autre part, des lames autonettoyantes destinées à être introduites chacune entre deux conduits 7.

L'installation des peignes et leur montage sur les appareils va être décrit dans ce qui suit en référence aux figures.

Tout d'abord, les barres conductrices 1 à 4 équipées de leur dents n ,p1, p2, p3 sont montées à l'intérieur du peigne P. Ces barres se montent perpendiculairement au support isolant moulé 5, ce qui facilite le travail du monteur, contrairement aux dispositifs de l'art antérieur dans lesquels le monteur fait glisser les barres 1 à 4 parallèlement à la direction longitudinale du support isolant 5. Cette nouvelle disposition des barres 5 favorise la dissipation thermique à l'intérieur de l'isolant. Lorsque la barre de neutre 4 est montée dans le support isolant 5, les dents de neutre n sont introduites dans les capots isolants précités 13, ce qui réalise l'indexage de la barre de neutre n dans le support. Lors du montage des barres dans les conduits, les éléments en creux prévus sur les barres coopèrent avec les parties en saillie prévues sur les parois des conduits de manière à réaliser un indexage des barres dans les conduits.

Puis, le peigne P ainsi constitué peut être recoupé à la longueur souhaitée. Lors de la recoupe du peigne monté, les parties évidées forment, entre les phases, un film d'air représentant une zone sans bavure entre les phases diminuant les risques d'amorçage, et permettant de rallonger la ligne de fuite L entre lesdites phases malgré les dépôts de limaille conductrice dans les parties isolantes. La longueur de la ligne de fuite peut être multipliée par un nombre allant de 4 à 6.

On réalise ensuite l'opération de raccordement en introduisant les dents d du peigne P dans les bornes correspondantes des appareils, tel qu'illustré sur les figures 4 à 8.

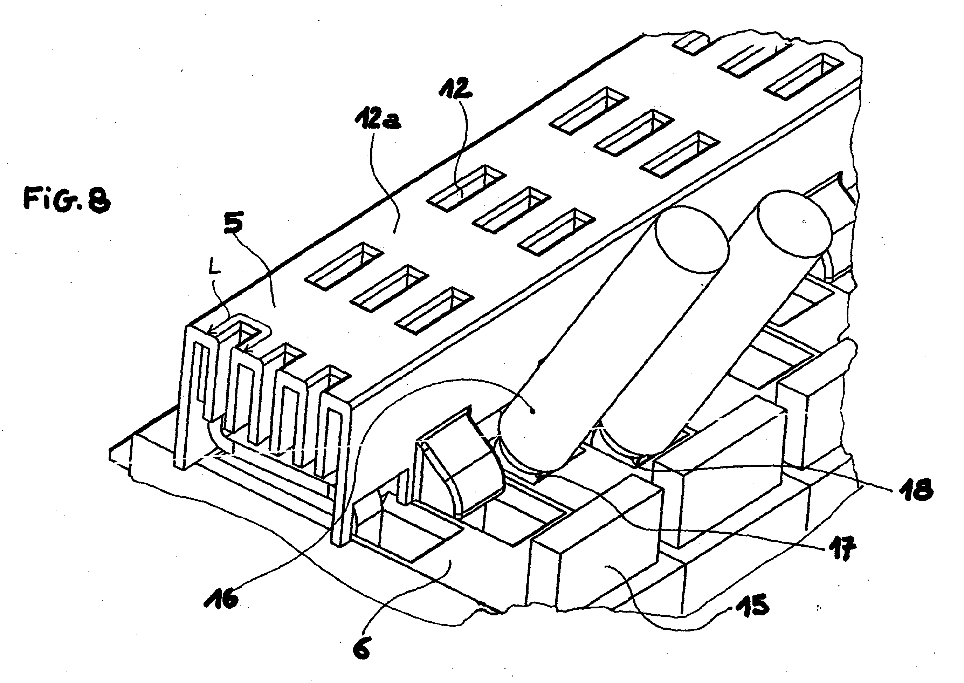

Du fait du décalage du support 5 de peigne P vers l'avant des appareils A, l'opérateur peut accéder facilement aux verrous 15 à partir de l'avant des appareils A (fig.8). Ce décalage permet également à l'opérateur de raccorder des câbles 16 de section importante aussi bien dans les bornes de phase 17 que dans les bornes de neutre 18 du peigne P comme illustré sur la figure 8.

Ce dispositif de raccordement permet de raccorder des appareils A de types variés tel que du type phase neutre, triphasé, triphasé plus neutre etc. Ces appareils A peuvent aussi bien être des appareils de commande, des appareils différentiels, des auxiliaires, etc.

On notera que les dents non utilisées pourront être isolées par un cache qui serait fixé par un clip sur l'isolant et non sur le cuivre des dents. Par exemple, des cache-dents extrudés pourront être clipsés sur le capot de neutre.

On notera que les peignes peuvent être alimentés par un connecteur tel qu'illustré sur la figure 4, ou bien par un appareil tête de groupe bipolaire, tripolaire, tétrapolaire, disjoncteur ou différentiel, ou autres.

Ce dispositif selon l'invention présente une grande facilité de raccordement et un accès également facilité aux bornes de raccordement pour un câble de section importante quelque soit la distance entre les bornes. L'indexage des barres, d'une part grâce aux encoches et bossages, pour les dents de phase, et d'autre part, grâce aux capots de neutre pour les dents de neutre, permet de garantir le pas et de faciliter la mise en place desdites barres..

Ce dispositif permet d'obtenir une bonne visibilité des bornes une fois le peigne installé, pour raccorder par câble et faire un contrôle visuel lors du raccordement.

Avantageusement, l'unité de base est un peigne dit 24 pôles. Un peigne dit 12 pôles pourra être réalisé par découpage en deux parties égales du peigne dit 24 pôles. Ces peignes présentent une grande facilité de découpe. Le peigne complet, c'est à dire une fois les barres montées à l'intérieur de l'isolant, peut être découpé à la longueur souhaitée au niveau des repères de coupe disposés avantageusement sur les trois faces de l'isolant, les parties ajourées dans le support isolant garantissant les distances d'isolement. Avantageusement, le même type de cuivre sera utilisé pour réaliser les barres d'un peigne du type phase neutre ou triphasé plus neutre ou autre. On notera également que plusieurs unités de base de peigne pourront être assemblées. Par exemple un peigne dit 48 pôles pourra être réalisé en réunissant deux isolants de peigne du type 24 pôles sur des parties cuivre de 48 pôles.

On notera que le peigne sera de préférence réalisé par moulage. Une autre solution pourra consister à réaliser un tel peigne par une opération d'extrusion suivie d'une opération de découpe des ouvertures (évidements).

## Revendications

1. Dispositif d'assemblage et d'alimentation d'une pluralité d'appareils électriques tels des appareils de puissance et des blocs auxiliaires fixés sur un rail de montage et ayant des boîtiers modulaires accolés côte à côte, comprenant au moins une barre conductrice, la ou lesdites barre(s) véhiculant respectivement une ou plusieurs phases (phases et/ou neutre), les dites barres étant logées dans un support isolant et s'étendant les unes parallèlement aux autres dans ledit support, chacune des barres comportant des dents réparties à intervalles réguliers le long de ladite barre et s'étendant perpendiculairement à la direction longitudinale de ladite barre, lesdites dents étant destinées à être introduites dans les bornes correspondantes des appareils, ledit support logeant les barres pouvant être recoupé en longueur suivant au moins un plan de découpe, le support précité (5) comportant un certain nombre de conduits (7), autant que de barres (1 à 4), de section transversale sensiblement en forme de U et débouchant du côté des appareils, lesdits conduits étant destinés à recevoir chacun une barre conductrice (1 à 4), les conduits étant séparés mutuellement par des parties complètement évidées (12) au niveau des plans de découpe (D) de manière à constituer des zones d'air aptes à rallonger la ligne de fuite (L) entre deux phases successives pendant l'opération de découpe, lesdits conduits étant réunis par des portions de matière (12a) dudit support entre les plans de découpe de manière à former un support monobloc, **caractérisé en ce que** chaque barre (1 à 4) s'étend dans un plan (B) décalé par rapport au plan (Q,R) dans lequel s'étendent les dents (d) qui lui sont associées, toutes les dents étant décalées par rapport au plan de leur barre respective suivant une même direction, le décalage étant tel que les dents (d) sont réparties suivant deux plans différents, le plan (Q) des dents de neutre et le plan (R) des dents de phase et **en ce qu'**en position montée, le support isolant (5) présente une face avant (5a) et une face arrière (5b) et **en ce que** le plan (Q) des dents de neutre est décalé par rapport au plan (R) des dents de phase en direction de l'arrière des appareils, la face arrière (5b) dudit support (5) se trouvant sensiblement dans le plan (R) des dents de phase.

2. Dispositif selon la revendication 1, **caractérisé en ce que** le support isolant précité (5) est réalisé par moulage.

3. Dispositif selon la revendication 1 ou 2, **caractérisé en ce que** le support isolant (5) comporte des repères (r) situés respectivement au niveau du ou de chaque plan de découpe (D).

4. Dispositif selon l'une quelconque des revendications précédentes, **caractérisé en ce que** les barres (1 à 4) s'étendent chacune dans un plan (B) parallèle au plan des dents (Q,R) qui lui sont associées, mais décalé par rapport à ce premier plan (B).

5. Dispositif selon l'une quelconque des revendications précédentes, **caractérisé en ce que** le support isolant (5) comporte, au niveau de chacune des dents de neutre (n), un capot isolant (13) apte à cacher la partie supérieure des dents de neutre (n) en position montée des appareils (A).

6. Dispositif selon la revendication 4 ou 5, **caractérisé en ce qu'**il comporte des moyens d'indexage des barres (1 à 4) à l'intérieur des conduits correspondants (7).

7. Dispositif selon la revendication 6, **caractérisé en ce que** ces moyens comprennent au moins une encoche prévue sur la ou chaque barre apte à coopérer avec un bossage prévu dans la paroi du conduit correspondant.

8. Dispositif selon l'une quelconque des revendications 3 à 7, **caractérisé en ce que** les repères de coupe (r) sont situés tous les 18m.

## Claims

1. Device for assembly and power supply of a plurality of electrical apparatuses such as power apparatuses and auxiliary units fixed on a support rail and having modular cases adjoined side by side, comprising at least one conducting bar, said bar or bars respectively carrying one or more phases (phases and/or neutral), said bars being housed in an insulating support and extending parallel to one another in said support, each of the bars comprising teeth arranged at regular intervals along said bar and extending perpendicularly to the longitudinal direction of said bar, said teeth being designed to be inserted in the corresponding terminals of the apparatuses, said support housing the bars being able to be recut in length in at least one cutting plane,
the above-mentioned support (5) comprising a certain number of ducts (7), as many ducts as there are bars (1 to 4), of appreciably U-shaped cross-section and opening out on the side where the apparatuses are located, said ducts being designed to each receive a conducting bar (1 to 4), the ducts being separated from one another by completely hollowed parts (12) at the level of the cutting planes (D) so as to form air zones designed to lengthen the creepage distance (L) between two successive phases during the cutting operation, said ducts being joined by portions of material (12a) of said support between the cutting planes so as to form a monoblock support, **characterized in that** each bar (1 to 4) extends in a plane (B) offset with respect to the plane (Q, R) in which the teeth (d) associated with the bar extend, all the teeth being offset in the same direction with respect to the plane of their respective bar, the offset being such that the teeth (d) are arranged in two different planes, the neutral teeth plane (Q) and the phase teeth plane (R), and that in the assembled position, the insulating support (5) presents a front face (5a) and a rear face (5b) and that the neutral teeth plane (Q) is offset with respect to the phase teeth plane (R) in the direction of the rear of the apparatuses, the rear face (5b) of said support (5) being located appreciably in the phase teeth plane (R).

2. Device according to claim 1, **characterized in that** the above-mentioned insulating support (5) is manufactured by casting.

3. Device according to claim 1 or 2, **characterized in that** the insulating support (5) comprises guide marks (r) situated respectively at the level of the or of each cutting plane (D).

4. Device according to any one of the foregoing claims, **characterized in that** the bars (1 to 4) each extend in a plane (B) parallel to the plane (Q, R) of the teeth that are associated therewith but offset with respect to this first plane (B).

5. Device according to any one of the foregoing claims, **characterized in that**, at the level of each of the neutral teeth (n), the insulating support (5) comprises an insulating cover (13) designed to cover the upper part of the neutral teeth (n) in the assembled position of the apparatuses (A).

6. Device according to claim 4 or 5, **characterized in that** it comprises means for indexing the bars (1 to 4) inside the corresponding ducts (7).

7. Device according to claim 6, **characterized in that** these means comprise at least one notch provided on the or each bar designed to cooperate with a boss provided in the wall of the corresponding duct.

8. Device according to any one of claims 3 to 7, **characterized in that** the cutting marks (r) are situated every 18 mm.

## Patentansprüche

1. Anordnung zur Verbindung und Stromversorgung von mehreren elektrischen Schaltgeräten wie zum Beispiel Leistungs-Schaltgeräten und Hilfsblöcken, die auf einer Tragschiene befestigt und in aneinander gereihten modularen Gehäusen angeordnet sind, welche Anordnung mindestens eine Leiterschiene umfasst, wobei die genannte Schiene bzw. die genannten Schienen eine oder mehrere Phasen (Phasen- und/oder Neutralleiter) führen und in einem Isolierstoffträger parallel zueinander angeordnet sind, wobei an jeder Schiene in gleichmäßigen Abständen angeordnete Zähne längs der genannten Schiene ausgebildet sind, welche Zähne rechtwinklig zur Längsachse der genannten Schiene gerichtet sind und dazu dienen, in zugehörige Klemmen der Schaltgeräte eingeführt zu werden, wobei der genannte Träger, in den die Schienen eingesetzt sind, in mindestens einer Ablängebene in Längsrichtung abgelängt werden kann, der genannte Träger (5) eine bestimmte Anzahl von Führungskanälen (7) entsprechend der Anzahl der Schienen (1 bis 4) mit annähernd U-förmigem Querschnitt umfasst, welche Führungskanäle an der Seite der Schaltgeräte auslaufen und dazu dienen, jeweils eine Leiterschiene (1 bis 4) aufzunehmen, sowie durch in Höhe der Ablängebenen (D) angeordnete, ausgenommene Bereiche (12) voneinander getrennt sind, derart dass diese Bereiche Luftstrecken bilden, die bei der Ablängung die Kriechstrecke (L) zwischen zwei benachbarten Phasen verlängern, wobei die genannten Führungskanäle durch zwischen den Ablängebenen ausgebildete Vollmaterialbereiche (12a) des genannten Trägers miteinander verbunden sind, derart dass ein einstückiger Träger gebildet wird, **dadurch gekennzeichnet, dass** jede Leiterschiene (1 bis 4) in einer Ebene (B) angeordnet ist, welche zur Ebene (Q, R) der jeweils zugeordneten Zähne (d) versetzt ist, wobei alle Zähne in Bezug zur Ebene ihrer zugehörigen Leiterschiene in der gleichen Richtung versetzt sind und dieser Versatz so ausgebildet ist, dass die Zähne (d) in zwei unterschiedlichen Ebenen, und zwar der Ebene (Q) der Neutralleiterzähne und der Ebene (R) der Phasenleiterzähne angeordnet sind, und dadurch, dass der Isolierstoffträger (5) nach der Montage eine Vorderseite (5a) sowie eine Rückseite (5b) aufweist, sowie dadurch, dass die Ebene (Q) der Neutralleiterzähne in Bezug zur Ebene (R) der Phasenleiterzähne zur Rückseite der Schaltgeräte hin versetzt ist und die Rückseite (5b) des genannten Trägers (5) annähernd in der Ebene (R) der Phasenleiterzähne liegt.

2. Anordnung nach Anspruch 1, **dadurch gekennzeichnet, dass** der genannte Isolierstoffträger (5) als Spritzgussteil ausgebildet ist.

3. Anordnung nach Anspruch 1 oder 2, **dadurch gekennzeichnet, dass** der genannte Isolierstoffträger (5) Markierungen (r) umfasst, die in Höhe der bzw. jeder Ablängebene (D) angeordnet sind.

4. Anordnung nach irgendeinem der vorhergehenden Ansprüche, **dadurch gekennzeichnet, dass** jede der Schienen (1 bis 4) in einer Ebene (B) angeordnet ist, die parallel zur Ebene (Q, R) der ihr zugeordneten Zähne verläuft, jedoch in Bezug zu dieser Ebene versetzt angeordnet ist.

5. Anordnung nach irgendeinem der vorhergehenden Ansprüche, **dadurch gekennzeichnet, dass** der Isolierstoffträger (5) in Höhe jedes Neutralleiterzahns (n) eine Isolierstoffabdeckung (13) umfasst, die nach der Montage auf den Schaltgeräten (A) den oberen Bereich des Neutralleiterzahns (n) verdeckt.

6. Anordnung nach Anspruch 4 oder 5, **dadurch gekennzeichnet, dass** sie Mittel zur korrekten Positionierung der Schienen (1 bis 4) in den zugehörigen Führungskanälen (7) umfasst.

7. Anordnung nach Anspruch 6, **dadurch gekennzeichnet, dass** diese Positioniermittel mindestens eine in der bzw. in jeder Schiene ausgebildete Aussparung umfasst, die mit einem in der Wand des zugehörigen Führungskanals ausgebildeten Vorsprung zusammenwirkt.

8. Anordnung nach irgendeinem der Ansprüche 3 bis 7, **dadurch gekennzeichnet, dass** die Ablängmarkierungen (r) in Abständen von jeweils 18 mm zueinander angeordnet sind.
